# EUROPEAN PATENT SPECIFICATION

(11) **EP 1 923 376 B1**
(45) Date of publication and mention of the grant of the patent: **15.06.2016**
(21) Application number: 07460022.2
(22) Date of filing: 01.10.2007
(51) Int. Cl.: C01C 1/24, C05C 1/00

(54) **PROCESS OF PREPARATION AMMONIUM NITRATE-SULPHATE**
VERFAHREN ZUR HERSTELLUNG VON AMMONIAKNITRATSULFAT
PROCESSUS DE PRÉPARATION DE NITRATE-SULFATE D'AMMONIUM

(30) Priority: 02.10.2006 PL 38072706
(43) Date of publication of application: 21.05.2008
(73) Proprietor: Grupa Azoty S.A., 33-101 Tarnow (PL); Grupa Azoty Zaklady Azotowe Kedzierzyn S.A., 47-220 Kedzierzyn Kozle (PL)
(72) Inventor: Biskupski, Andrzej, 53-030 Wroclaw (PL); Franczak-Szatko, Boguslawa, 33-100 Tarnow (PL); Gniadek, Leszek, 39-215 Czarna (PL); Koziol, Krzysztof, 47-232 Kedzierzyn-Kozle (PL); Koziol, Tomasz, 33-102 Tarnow (PL); Koziol, Wieslaw, 33-101 Tarnow (PL); Kruszewski, Andrzej, 33-100 Tarnow (PL); Laszkiewicz, Tadeusz, 47-230 Kedzierzyn-Kozle (PL); Malinowski, Przemyslaw, 48-304 Nysa (PL); Ochal, Andrzej, 47-220 Kedzierzyn-Kozle (PL); Potaczek, Pawel, 32-824 Bielcza (PL); Prokuski, Franciszek, 33-100 Tarnow (PL); Radwanski, Mieczyslaw, 47-220 Kedzierzyn-Kozle (PL); Wyroba, Zygmunt, 33-101 Tarnow (PL); Kopec, Artur, 33-156 Skrzyszów (PL)
(74) Representative: Krawczyk, Lilianna

(56) References cited:
- BE-A- 388 046
- BE-A- 632 094
- GB-A- 893 389
- GB-A- 1 231 371
- GB-A- 1 340 884
- JP-A- 59 004 428
- US-A1- 2003 099 589

## Description

The invention relates to the production process of ammonium sulphate nitrate from ammonium nitrate solution, crystalline or ground ammonium sulphate and dolomite in a continuous production process, in which the final product is achieved by means of a mechanical granulation method with a stage of screening of the fraction proper, which is subsequently cooled and conditioned. The separated under-size particles and the crushed oversized material return to the process of granulation, the reaction of double salt formation progressing in a multistage reaction system which comprises a mixing unit and a multistage granulation system.

Ammonium sulphate nitrate fertilizer with stable physicochemical qualities is a granulated product which does not have a tendency to agglomerate, its granules do not change their shape and internal structure and, as a result, retain stable mechanical properties.

There are well known technologies of producing nitrate sulphate fertilizers based on mixing ammonium nitrate solution or melt with crystalline nitrate sulphate. From a physicochemical point of view, methods of preparing nitrate sulphate fertilizers can be classified into two categories of processes, according to the type and qualities of nitrate sulphate pulp which is used in the manufacturing process of the fertilizer. In the first type of processes, pulp is prepared on the basis of NH₄NO₃ up to 96% solution, while in the second category pulp is prepared from melt NH₄NO₃ melt with over 96% concentration. In the former process, where pulp is prepared on the basis of NH₄NO₃ solution, pulp temperature in the subsequent stages of the process usually ranges between 60° and 120°C, while water content is higher than 6% by weight.

When pulp is prepared from melt, its temperature ranges between 120° and 210°C, while water content in pulp is below 1% by weight. When pulp is produced from a solution, double salts are formed as a result of reactions proceeding in the saturated solution of both double salts 2(NH₄NO₃) · (NH₄)₂SO₄, 3 (NH₄NO₃) · (NH₄)₂SO₄, in which crystals of double salts and crystals of raw materials are dispersed. When pulp is produced from ammonium nitrate sulphate on the basis of NH₄NO₃ melt, double salts are formed in the melt of both raw materials salts, with the crystals of double salts and the crystals of raw materials salts being dispersed in the melt.

There is a method of producing ammonium sulphate nitrate, described in a Polish invention PL85 766 according to which ammonium nitrate sulphate is produced by placing ammonium nitrate solution 95% mass concentration and 125°C temperature into ammonium sulphate water solution, 45%mass concentration and 52°C temperature. Subsequently, the mixture is cooled to -12°C, crystallised double salt is separated, dried and shaped under pressure. This invention allows additives ( steel slag dust, dust limestone or dolomite) in the dried salt in order to improve mechanical qualities of ammonium sulphate nitrate granules.

EP 1 595 860 patent application describes the following method of producing ammonium sulphate nitrate granulated fertilizer. First ammonium sulphate nitrate pulp is prepared by dosing ammonium sulphate into the pulp, with ammonium nitrate: ammonium sulphate molar ratio ranging from 1,8 to 2,2:1. Next, the remaining amount of ammonium sulphate is added to this pulp at 65 to 110°C. The amount of added ammonium sulphate is the following: ammonium nitrate: ammonium sulphate molar ratio is lower than 2, which according to the inventor, ensures complete reaction of ammonium nitrate to double salt, with two particles of ammonium nitrate and one particle of ammonium sulphate. To improve physical and mechanical properties as well as nutritive qualities of the granulated product, salts of trace elements and solidifying agents can be added to the pulp solution.
In Polish patent PL 172679, the granulation system used especially for compound fertilizers comprises a grinder, a mixing unit, a plate granulator and a grain drier, the mixing unit being a drum granulator.

According to this invention, ammonium sulphate nitrate is produced in a multistage reaction system which comprises a mixing stage followed by a granulation stage. The parameters in both stages are adjusted in such a way that ammonium nitrate undergoes conversion to double salts. Ammonium sulphate nitrate suspension is prepared in a continuous process by feeding ammonium nitrate solution, dolomite and ammonium sulphate into the reactor. Dolomite addition in the reaction system stabilizes ammonium nitrate and prevents its decomposition in the reaction medium. Additionally, it has a positive influence on the safety of the process, subsequent technological operations and product storing, as it neutralizes any surplus of nitric acid, formed as a result of ammonium nitrate hydrolysis. The contents of the reactor is thoroughly mixed with continuous heat input to maintain a preferable temperature for the process of 120°C (not lower). This temperature, as well as proper water content of the mixture, condition obtaining pulp fluidity which, in turn, allows the formation of ammonium sulphate and ammonium nitrate double salts and ensures proper conditions of the granulation process. The time the reaction mixture should remain in the reactor should not exceed the total time of the granulation stage and the drying stage. Ammonium sulphate nitrate pulp of a desired composition is directed to a multistage granulation system which consists of a 2 shaft granulator (the first granulation step) and a drum granulator (the second granulation step). After the initial shaping of the granules in the first step granulator, the mixture is directed into the second step granulator. The time granules should stay in the drum granulator is regulated by the speed of drum revolutions. The time the mixture stays in the second stage granulator is at least twice shorter than the time of the mixing stage. It is desirable that the mixture remains in the second step granulator about 8-10 times shorter than in the mixing unit. The product of proper granularity is dried, screened, cooled, sprayed with anti-lump substance, bagged and shipped. Molar ratio of ammonium nitrate : ammonium sulphate depends on a desired sulphur content in the final product and ranges between 4,94:1 and 1,29:1. Dolomite is added to the mixture in form of powder with grain size below 100µm, preferably 60-80µm. The ratio of powdered dolomite to the remaining components of the mixture is 2-18% by weight. Ammonium sulphate is fed into the reactor in fine-crystalline or powdered form at 30-60°C, preferably at 40-45°C. Most ammonium sulphate grains should not exceed 200µm of size. The reactor is heated indirectly. The reactor with ammonium sulphate nitrate pulp is also fed with water steam at 0,9 MPa and a process condensate. The first step granulator (a two shaft granulator) is equipped with condensate feed and steam feed which adjust the temperature of the process and pulp fluidity. The second step granulator (a drum granulator) is not air driven. It has revolution control which enables adjustment of a preferable period of time for granules to stay in the drum, which guarantees proper granule shape and hardness of the final product. Granules are dried in a drum drier. The production process of ammonium nitrate sulphate allows the use of additives to improve the qualities of the product.

This method, according to the invention, enables safe production process of ammonium sulphate nitrate from ammonium nitrate solution and powdered or fine-crystalline ammonium sulphate. Moreover, ammonium sulphate nitrate can be produced with different sulphur content ranging from 5 to 15%. Dolomite addition in the solution ensures safe production and storage conditions of the fertilizer. Dolomite, which is continuously fed into the mixing unit in the ratio to the remaining components in the reactor amounting to 2-18% by weight stabilizes the reaction system and prevents ammonium nitrate decomposition in the reaction medium, additionally, it has a positive influence on the safety of the process and uncontrolled decomposition of the final product when it is stored. Multistage granulation system allows the adjustment of optimal temperature of the process, which results in sufficient shaping of granules with proper mechanical properties, as well as sufficient degree of ammonium nitrate reaction to double salts.

Ammonium sulphate nitrate production process on the basis of pulp solution creates better conditions for double salt crystals formation and growth. When granulated ammonium sulphate nitrate is produced from pulp on the basis of NH₄NO₃ solution, double salts crystallize from the solution, while unreacted parts of raw materials remain in the granulate. Short time of pulp formation, low solubility of (NH₄)₂SO₄ in NH₄NO₃ and rapid cooling cause incomplete reaction of raw materials. A part of unreacted raw materials stays in the product, which, if stored in moisture conditions, can diminish the quality of granules, or even degrade granulate to powder, with respect to the amount of thermodynamically unstable salts in the compound system of granules.
Multistage reaction system makes it possible to optimize conditions of ammonium sulphate nitrate production process in the direction of double salts production. Double salts have lower solubility than ammonium nitrate and higher hygroscopic point, which makes them more stable to water absorption than ammonium nitrate.

Considering its applicability in fertilizing and enhancing nutrients, granulated fertilizer based on double salts is more beneficial.

The subject of the invention has been disclosed in the following examples to demonstrate methods of ammonium sulphate nitrate production with different sulphur content in the final product.

### Example 1

Raw materials are mixed to form pulp which subsequently undergoes granulation in a reactor comprising a mixer, a coil pipe and a heating jacket steam heated at 0,9 MPa. Ammonium nitrate solution 91% concentration, 130°C, in the amount of 22,96 Mg/h is fed into the reactor. Next, crystalline or ground ammonium sulphate 40-45°C, up to 200µm granularity, in the amount of 26,81 Mg/h is charged into the reactor together with powdered dolomite in the amount of 2,29 Mg/h. Powdered dolomite stabilizes ammonium nitrate and improves safety of the subsequent technological operations and storage of the final product. The contents of the reactor is thoroughly mixed at 120-160°C, preferably at 140°C (the temperature must be maintained during the operation) by means of indirect heating and addition of water steam at 0,9 MPa and 180°C. The amount of steam which is fed equals 0,100 Mg/h. The pulp produced in the reactor is forced through into the 2 shaft granulator, where it combines with the returned portion amounting to 115,0 Mg/h. The 2 shaft granulator works as the first step granulator. The approximate temperature of 100°C is maintained in the first step granulator. Subsequently, water steam is fed into the granulator, amounting to 0,350 Mg/h at 0,9 MPa. Water content in the product after the first step granulation amounts to 1,74% by weight. Water steam which is fed into the granulator allows to regulate granulation temperature and moistures particles which undergo granulation process. Next, the granulate is directed from the 2 shaft granulator into the second step drum granulator, where grains undergo final shaping. Drum revolutions amount to 7,9 rev/min, while the time the granulate remains in the drum granulator amounts to 2-3 minutes. The second step granulator works at a temperature of 96°C at the inlet to the granulator and 89°C at the outlet. Water content in the product after the second step granulation amounts to 1,66% by weight. Subsequently, the granulate is dried and screened. The onsize product constitutes 50,10 Mg/h, and the offsize granules amount to 115,0 Mg. The onsize fraction is cooled by means of fluid bed system and treated with anti-lump substance in the spray drum. The undersize material and the crushed oversize material is recycled to the first step granulator. Moisture content in the final product amounts to 0,34% by weight. The final product contains 25,9%N and 12,9%S.

### Example 2

Preparation of the mixture which will undergo granulation takes place in a reactor comprising a mixer, a coil pipe and a heating jacket steam heated at 0,9 MPa. Ammonium nitrate solution 92% concentration, approx.130°C, in the amount of 26,76 Mg/h is fed into the reactor. Next, crystalline or ground ammonium sulphate 40-45°C, up to 200µm granularity, in the amount of 20,63Mg/h is charged into the reactor together with powdered dolomite in the amount of 4,73 Mg/h. Powdered dolomite stabilizes ammonium nitrate and improves safety of the subsequent technological operations and storage of the final product. The contents of the reactor is thoroughly mixed at 120-160°C, preferably at 140°C (the temperature must be maintained during the operation), by means of indirect heating and addition of water steam at 0,9 MPa and 180°C. The amount of steam which is fed equals 0,150 Mg/h. The pulp is mixed for approximately 30 min. The pulp produced in the reactor is forced through into the 2 shaft granulator, where it combines with the returned portion amounting to 115,1 Mg/h. The 2 shaft granulator works as the first step granulator. The approximate temperature of 97°C is maintained in the first step granulator. Subsequently, water steam is fed into the granulator, amounting to 0,430 Mg/h at 0,9 MPa. Water content in the product after the first step granulation amounts to 1,83% by weight. Water steam which is fed into the granulator allows to regulate granulation temperature and moistures particles which undergo granulation process. Next, the granulate is directed from the 2 shaft granulator into the second step drum granulator, where grains undergo final shaping. Drum revolutions amount to 7,9 rev/min, while the time the granulate remains in the drum granulator amounts to 2-3 minutes. The second step granulator works at a temperature of 96°C at the inlet to the granulator and 89°C at the outlet. Water content in the product after the second step granulation amounts to 1,76% by weight. Subsequently, the granulate is dried and screened. The onsize product constitutes 50,05 Mg/h, and the offsize granules amount to 115,1 Mg/h. The onsize fraction is cooled by means of fluid bed system and treated with anti-lump substance in the spray drum. The undersize material and the crushed oversize material is recycled to the first step granulator. Moisture content in the final product amounts to 0,42% by weight, nutrient content equals 25,9%N and IO,0%S.

### Example 3

Preparation of the mixture which will undergo granulation takes place in a reactor comprising a mixer, a coil pipe and a heating jacket steam heated at 0,9 MPa. Ammonium nitrate solution 93% concentration, approx.125-135°C, preferably 130°C, in the amount of 33,22 Mg/h is fed into the reactor. Next, crystalline or ground ammonium sulphate 40-45°C, up to 200µm granularity, in the amount of 10,31 Mg/h is charged into the reactor together with powdered dolomite in the amount of 8,79 Mg/h. Powdered dolomite stabilizes ammonium nitrate and improves safety of the subsequent technological operations and storage of the final product. The contents of the reactor is thoroughly mixed at 120-160°C, preferably at 140°C (the temperature must be maintained during the operation), by means of indirect heating and addition of water steam at 0,9 MPa and 180°C. The amount of steam which is fed equals 0,320 Mg/h. The pulp is mixed for approximately 30 min. The pulp produced in the reactor is forced through into the 2 shaft granulator, where it combines with the returned portion amounting to 135,0 Mg/h. The 2 shaft granulator works as the first step granulator. The approximate temperature of 100°C is maintained in the first step granulator. Subsequently, water steam is fed into the granulator, amounting to 0,210 Mg/h at 0,9 MPa. Water content in the product after the first step granulation amounts to 1,77% by weight. Water steam which is fed into the granulator allows to regulate granulation temperature and moistures particles which undergo granulation process. Next, the granulate is directed from the 2 shaft granulator into the second step drum granulator, where grains undergo final shaping. Drum revolutions amount to 7,9 rev/min, while the time the granulate remains in the drum granulator amounts to 2-3 minutes. The II step granulator works at a temperature of 96°C at the inlet to the granulator and 89°C at the outlet. Water content in the product after the second step granulation amounts to 1,70% by weight. Subsequently, the granulate is dried and screened. The onsize fraction is cooled by means of fluid bed system and treated with anti-lump substance in the spray drum. The undersize material and the crushed oversize material amounting to 135,0 Mg/h is recycled to the I step granulator. The product which is produced amounts to 50,1 Mg/h with 0,35% water content. Moisture content in the final product amounts to 0,35% by weight, nutrient content equals 25,9%N and 5,0%S.

## Claims

1. A method of producing ammonium sulphate nitrate from ammonium nitrate solution, crystalline or powdered ammonium sulphate and dolomite in an industrial production process, in which the final product is obtained by means of mechanical granulation and screening of the desired fraction, which is subsequently cooled and conditioned, the under-size particles and the disintegrated oversized material being returned to the process of granulation, **characterized by** that ammonium sulphate nitrate is produced in a multistage reaction system which comprises a mixing stage and a granulation stage followed by a drying stage, with the parameters in each stage adjusted in such a way that ammonium nitrate undergoes maximum conversion to double salt, ammonium sulphate nitrate suspension being prepared by means of continuous mixing in a mixing unit and feeding ammonium nitrate solution, dolomite in a powdered form with grain size below 100 µm, ammonium sulphate in fine-cristalline or powdered form with grain size below 200 µm at temperature 30 to 60°C, water steam at 0,9 MPa and a process condensate, into the reactor, thoroughly mixing the contents of the reactor with continuous heat input necessary to maintain a temperature for the process of not lower than 120°C, wherein the ammonium nitrate : ammonium sulphate molar ratio in the reactor depends on the desired sulphur content in the final product and ranges between 4,94:1 and 1,29:1 and the dolomite is continuously fed into the mixing unit in the ratio to the remaining components in the reactor amounting to 2-18% by weight; and subsequently the ammonium sulphate nitrate pulp is directed to the multistage granulation system comprising a 2 shaft granulator with a moisturising system in the first granulation step and a drum granulator in the second granulation step, the time the reaction mixture stays in the drum granulator is at least twice shorter than the time of the mixing stage, preferably 8-10 times shorter, followed by drying, screening and cooling the product, the granules of the final product with desired granularity are bagged and shipped.

2. A method in accordance with patent claim 1, **characterized by** that dolomite is fed into the reactor in a powdered form with grain size 60 to 80 µm.

3. A method in accordance with patent claim 1, **characterized by** that ammonium sulphate is fed into the first step reaction, into reactor at temperature 40 to 45°C.

4. A method in accordance with patent claim 1, **characterized by** that the mixing reactor is heated indirectly.

5. A method in accordance with patent claim 1, **characterized by** that the granulator drum works without air blowing with changeably adjustment of rotations.

6. A method in accordance with patent claim 1, **characterized by** that ammonium sulphate nitrate production process incorporates using additives to improve the qualities of the final product and influence its nutritive properties.

## Patentansprüche

1. Verfahren zur Herstellung von Ammoniaknitratsulfat aus Ammoniumnitratlösung, kristallinischem oder gemahlenem Ammoniumsulfat und aus Dolomit in dem industriellen Produktionsprozess, wobei das Endprodukt durch die mechanische Granulation mit der Etappe der Abscheidung auf den Sieben der spezifischen Fraktion erhalten wird, die gekühlt und konditioniert wird und mit der Etappe der Sortierung auf den Sieben der Fraktionen, die als Unterkorn und Überkorn zum Granulationsprozess rückgeführt werden, **dadurch gekennzeichnet, dass** Ammoniaknitratsulfat in einem Mehrstufenreaktionssystem hergestellt wird, das aus der Mischvorrichtung, Granulationsystem und Trocknungsanlage besteht und die Prozessparameter in jeder Reaktionsstufe so festgestellt sind, damit maximale Konvertierung von Ammoniumnitrat zum Doppelsalz gewähren, wobei Suspension von Ammoniaknitratsulfat kontinuierlich in der Mischvorrichtung durch Dosierung von Ammoniumnitratlösung, Dolomit in Pulverform mit der Korngrößeverteilung unter 100 µm, Ammoniumsulfat in kristallinischer Form oder in Mehlform mit der Korngröße unter 200 µm bei Temperatur 30-60 °C mit Dampf von 0,9 MPa und mit dem Prozesskondensat zum Reaktor-Mischer vorbereitet wird, die Reaktionsmischung wird intensiv gemischt, kontinuierlich Wärme zum Reaktionssystem in einer solchen Menge zuführend, damit die Temperatur der Reaktionsmischung im Reaktor nicht niedrieger als 120°C wird, wobei das Molverhältnis von Ammoniumnitrat: Ammoniumsulfat im Reaktor von erfoderlichem Schwefelgehalt im Endprodukt abhängig ist und zwischen 4,94 :1 und 1,29:1 liegt und Dolomit zum Mischsystem in der Menge von 2-18 Gewichtsprozent kontinuierlich zugeführt ist, bezogen auf die Masse der übrigen Komponenten, danach wird der Brei von Ammoniaknitratsulfat zum mehrstufigen Granuliersystem gerichtet, bestehend aus zweiwelligem Granulator, der mit Befeuchtungsystem ausgestattet ist als Granulator der ersten Stufe, und aus der Granuliertrommel als Granulator der zweiten Stufe, wobei die Verweilzeit der Reaktionsmischung in der Granuliertrommel mindestens zweimal kürzer als die Verweilzeit der Reaktionsmischung in der Mischvorrichtung ist, vorteilhaft von 8 bis 10 mal kürzer, danach wird das Produkt getrocknet, auf den Sieben sortiert und gekühlt, und danach werden die Granulaten des Endprodukts von Ammoniaknitratsulfat mit der bestimmten Körnigkeit konfektioniert und zu den Abnehmern gerichtet.

2. Verfahren gemäß Anspruch 1, **dadurch gekennzeichnet, dass** Dolomit zum Reaktor in Mehlform mit Korngröße von 60-80 µm zugefügt wird.

3. Verfahren gemäß Anspruch 1, **dadurch gekennzeichnet, dass** Ammoniumsulfat zur ersten Reaktionsstufe bei Temperatur 40-45 ° C zugefügt ist.

4. Verfahren gemäß Anspruch 1, **dadurch gekennzeichnet, dass** der Mischreaktor indirekt beheizt ist.

5. Verfahren gemäß Anspruch 1, **dadurch gekennzeichnet, dass** die Granuliertrommel ohne Durchblasen der Luft mit der stetigen Drehzahlregelung arbeitet.

6. Verfahren gemäß Anspruch 1, **dadurch gekennzeichnet, dass** im Produktionsprozess von Ammoniaknitratsulfat die Eigenschaften verbessernde Additive des Produkts, sowie modulierende Ernährungseigenschaften des fertigen Produkts angewendet werden.

## Revendications

1. Procédé de fabrication du nitrate-sulfate d'ammonium de la solution du nitrate d'ammonium, du sulfate d'ammonium cristallin ou moulu et de la dolomite, dans le procédé industriel, où le produit final est obtenu par la granulation mécanique avec une etap du tamisage de la fraction proprée, qui est réfrigérée et conditionnée et des fractions déclassés supérieurs et déclassés inférieurs qui son recyclé à la granulation, **caractérise en ce que** nitrate-sulfate d'ammonium est fabriqué dans le système réactionnel à plusieurs stades successifs qui consiste en dispositif du mélange, dispositif de la granulation et dispositif de séchage du produit, et les paramètres à chaque stade réactionnel sont adjustés de cette façon pour obtenir la plus grande conversion de nitrate d'ammonium en le sel double, avec tout cela la suspension de nitrate-sulfate d'ammonium est préparée dans le mode continu à dispositif du mélange par dosage de la solution de nitrate d'ammonium, dolomite poudre avec la granulomètrie au-dessous de 100 µm, sulfate d'ammonium cristallin ou poudre avec la granulomètrie au-dessous de 200 µm, dans la temperature 30 - 60 ° C et avec vapeur 0,9 MPa et condensat du processus au réacteur -mélangeur, le mélange réactionnel est agité énergiquement avec telle admission de la chaleur pour obtenir la temperature non inférieure de niveau de 120 ° C, où rapport de moles nitrate d'ammonium : sulfate d'ammonium est fonction du demandé teneur de soufre dans le produit finale et il est compris parmi 4,94 :1 et 1,29 : 1, tandis que dolomite est admis dans le mode continu au dispositif de mélange dans quantité de 2 a 18 mass % par rapport à la masse des constituants résiduels, ensuite pulpe du nitrate-sulfate d'ammonium est condui vers le dispositif de la granulation à plusieurs échelons, qui consiste en granulateur à deux arbres, équipé de système de mouillance, qui est granulateur du premier échelon, et tambour granulateur qui est granulateur du deuxième echelon, où le temps de séjour du mélange réactionnel au tambour granulateur est au moins deux fois plus court que le temps de séjour du mélange réactionnel au dispositif de mélange, surtout de 8 a 10 fois plus court, puis le produit est séché, classé aux tamis et réfrigéré, et ensuite les granules du produit fini c-est-à-dire de nitrat-sulfat d'ammonium avec granulomètrie demandée sont conditionnés et envoyés aux clients.

2. Procédé selon la revendication 1, **caractérisé en ce que** dolomite est ajoutée au réacteur sous la forme de poudre avec la granulomètrie 60 - 80 µm.

3. Procédé selon la revendication 1, **caractérisé en ce que** sulfat d'ammonium est additionné au premier échelon réactionnel dans la temperature 40 - 45 ° C.

4. Procédé selon la revendication 1, **caractérisé en ce que** réacteur du mélange est chauffé indirectement.

5. Procédé selon la revendication 1, **caractérisé en ce que** tambour granulateur marche sans injection d'air avec une régulation continue des rotations.

6. Procédé selon la revendication 1, **caractérisé en ce que** pendant le processus de production de nitrat-sulfat d'ammonium on emploie des additifs qui améliorent propriétés d'exploitation du produit, et aussi additifs qui modèlent propriétés nutritives du produit fini.
